# EUROPEAN PATENT APPLICATION

(11) **EP 3 498 591 A1**
(43) Date of publication of application: **19.06.2019**
(21) Application number: 17400070.3
(22) Date of filing: 13.12.2017
(51) Int. Cl.: B64C 1/06, B64C 27/04, B64C 3/18

(54) **A COMPOSITE TRUSS BEAM WITH A SANDWICH WEB**

(71) Applicant: AIRBUS HELICOPTERS DEUTSCHLAND GmbH, 86609 Donauwörth (DE)
(72) Inventor: Fink, Axel, D-86609 Donauwörth (DE); Einzmann, Constantin, D-86159 Augsburg (DE); Vinke, Chris, D-86698 Oberndorf-Am-Lech (DE); Schreiber, Thomas, D-86199 Augsburg (DE); Ovsepjan, Sergej, D-81243 München (DE)
(74) Representative: GPI & Associés

(57) **Abstract**

The invention is related to a composite truss beam 12, comprising a first composite skin panel 12a that is essentially flat, a second composite skin panel 12b, and a composite core 12c that is arranged between the first and second composite skin panels 12a, 12b, wherein at least the second composite skin panel 12b comprises an accommodation 12g in which the composite core 12c is accommodated such that the first and second composite skin panels 12a, 12b and the composite core 12c form a sandwich web 13 which comprises a plurality of semi-truss members 13a and a plurality of nodal areas 13c that interconnects the plurality of semi-truss members 13a, wherein each nodal area of the plurality of nodal areas 13c interconnects not more than two semi-truss members of the plurality of semi-truss members 13a, and wherein the plurality of semi-truss members 13a delimits a plurality of regular cut-outs 13b.

## Description

The invention is related to a composite truss beam for supporting shear loads and bending loads in an airframe of a rotary wing aircraft. The invention is further related to a rotary wing aircraft comprising such a composite truss beam.

Rotary wing aircrafts and, more particularly, helicopters are usually provided with airframes resp. fuselages that are in general characterized by pronounced discontinuities due to numerous openings, cut-outs, windows and hatches that are required e.g. for boarding, provision of emergency exits, visibility and quick accessibility to respective rotary wing aircraft systems. Therefore, conventional airframe resp. fuselage designs that require use of an outer stressed shell, either in monocoque or in semi-monocoque architecture, are frequently not fully efficient for realizing front and center airframe resp. fuselage portions of a given rotary wing aircraft with respect to provision of sufficient stiffness and strength on a respective airframe resp. fuselage hull.

However, a respective tail cone and an intermediate structure that connects the center airframe resp. fuselage portion to the tail cone usually feature more or less continuous shells with a stressed shell design. Hence, airframes resp. fuselages of rotary wing aircrafts, especially front and center airframe resp. fuselage portions, require additional structural elements which are arranged within the airframe resp. fuselage hull as support or even main load carrying members. These members essentially act as beams subjected to in-plane bending and shear loads and interact within the airframe resp. fuselage that is rigidly connected to frames, stringers and skins.

Respective beam members are usually either oriented longitudinally or vertically with respect to a given longitudinal axes of a respective rotary wing aircraft. Longitudinally oriented beam members are either housed on a given upper airframe resp. fuselage portion or within a respective subfloor airframe resp. fuselage portion, which is confined and spanning an entire volume between a lower shell and a cabin floor of the airframe resp. fuselage. As a consequence, such longitudinal oriented beams are usually featuring a comparatively large height, which approximates up to 500mm for medium-to-heavy rotary wing aircrafts.

More specifically, longitudinally oriented beams allocated within a subfloor region of a respective center airframe resp. fuselage portion are usually confined in-between an associated tank compartment and are, thus, required to be continuous in order to provide for an adequate support of respective tank bladders. The tank compartment between the longitudinally oriented beams and a skin of a given rotary wing aircraft is usually used for housing of systems, pipes, controls, harnesses and equipment, and the skin is usually cut out as required for providing adequate accessibility. Furthermore, in the front airframe resp. fuselage portion of the given rotary wing aircraft, longitudinally oriented beams that implement respective subfloor beams delimit together with the respective rotary wing aircraft skin compartments for housing of associated front landing gear, systems such as emergency flotations, batteries, and so on, and are not necessarily required to be continuous.

Vertically oriented beams usually connect respective lower and upper airframe resp. fuselage portions. More specifically, vertically oriented beams are usually used to cantilever respective longitudinally oriented subfloor beams for being connected to respective lower and upper central shells of the front airframe resp. fuselage portion. Thus, the vertically oriented beams usually span the pitch between two adjacent airframe resp. fuselage frames and, consequently, provide storage volume for additional systems and equipment.

Conventional structural arrangements and constructions of such longitudinally and vertically oriented beams, which are frequently implemented as bending beams, are usually characterized by structures with too large margins against stability and strength, which lead to an insufficient degree of structural and material utilization and, thus, to a weight inefficient design. This is mainly due to technological constraints which enforce using a larger amount of material than actually required from a stress point of view, which is particularly relevant in large and wide beam constructions.

In order to improve weight issues with respect to such longitudinally and vertically oriented beams, the beams can be implemented as composite beams. In general, such composite beams are formed as integral elements composed of two monolithic flanges that are respectively provided with associated caps. The caps and/or the monolithic flanges are interconnected by means of a flat web structure that allows to produce composite beams with a comparatively large height.

The monolithic flanges can be simple angular structures for connecting purposes in order to allow attachment of a given composite beam to an adjacent structural part, e.g. to a frame in a respective airframe resp. fuselage. Consequently, such frames and the monolithic flanges simultaneously act as the caps of the composite beam and are provided for carrying respectively a largest portion of occurring longitudinal bending loads in operation. The flat web carries a portion of the longitudinal bending loads, but mainly supports occurring shear loads.

Usually, the flat web is designed as a monocoque sandwich structure that provides for a required resistance against global web buckling. A respective construction of the monocoque sandwich panel is generally characterized by an upper resp. front and lower resp. rear composite skin panel and a composite core. The composite skin panels are usually bonded to each side of the composite core, typically by using adhesive films.

In most cases, the composite core is either made of cellular foam or implemented as a honeycomb core. Use of a honeycomb core is preferred for structural parts with respect to its outstanding specific strength and stiffness properties, as well as a better overall damage resistance and interface bond characteristics. In terms of an underlying structural mechanical performance, a respectively selected core thickness is merely driven by a required panel bending stiffness in order to ensure global buckling resistance. In contrast thereto, respective thicknesses of the composite skin panels are merely driven by respective local strengths and stability requirements, such as e. g. skin wrinkling.

In any case, airframe resp. fuselage bending beams are frequently characterized by a low structural index, i.e. by large web heights and low shear load flux. In fact, the structural index for a bending beam is defined by a respective ratio of shear load flux in relation to an underlying web height, where the shear load flux in turn is a respective ratio of shear load to web height.

In those cases, a selected design for the monocoque sandwich panel that implements the flat web is limited by technological requirements, such as handling, manufacturing, robustness and joints, i. e. inserts installation, rather than by pure stress requirements. These technological requirements usually cause use of thicker composite skin panels and composite cores than those really needed in terms of stiffness and strength. Thus, a respectively selected design is often limited by a minimum feasible configuration featuring a minimum number of plies and a minimum core thickness. In other words, an optimal sandwich design is not able to fully develop its potential in terms of weight efficiency due to technological constraints.

One option that allows to remedy these problems is to use buckling type skin stiffened designs. More specifically, such buckling type skin stiffened designs represent efficient alternatives in comparison to sandwich designs for shear loaded beams with a low structural index, which offer even larger performance when allowing the flat web to locally buckle under relatively low loads. These buckling type skin stiffened designs are usually characterized by a flat web skin which is stiffened by additional stiffeners. These additional stiffeners are usually riveted or bonded to the flat web skin and arranged perpendicular to an underlying longitudinal extension of a respective composite beam, i.e., spanning a shortest possible distance between respective caps of the composite beam. These so called vertical stiffeners or uprights generally act as panel breakers that delimit individual bays of the flat web, and, hence, increase an underlying buckling resistance of the composite beam. The buckling resistance of a given composite beam, thus, corresponds to the buckling resistance of each individual bay, which can be adjusted as a function of the flat web skin thickness and a given pitch of the uprights. A cross-section of the uprights is usually a result of a required bending stiffness for an efficient web skin support, as well as for column buckling resistance in a post-buckling regime.

Improved designs of composite beams are characterized by comparatively thin skins and a large amount of uprights, wherein the respective skin panels still provide a largest amount of an underlying total weight of the composite beam. In order to achieve an improved efficiency in comparison to a sandwich structure, a given web skin has to be adapted such it may buckle under relatively low loads. In other words, the skin panels must be able to operate as semi-diagonal tension fields within a post-buckling regime. This is, however, usually not acceptable in terms of stiffness of the composite beam, as the shear stiffness varies with the degree of exceedance of an applied buckling load, and even strength, as there is a delamination risk between stiffeners and the skin panels, depending on an underlaying skin thickness. Consequently, usually only low post-buckling factors are allowed, i. e. low degrees of exceedance of an applied buckling load. However, this leads to a loss of the advantage of buckling type stiffened designs in comparison to sandwich designs. Nevertheless, an improvement of a respective efficiency of composite beams at low structural index can be achieved by use of discrete arrangements, e. g. by using composite beams that are implemented according to truss type designs, instead of continuous arrangements.

More specifically, truss type designs for composite beams and, in particular, bending beams are widely used for airframe structures of aircrafts. In fact, respective composite truss beams are suitable to reach a comparatively large efficiency at low structural index in comparison to sandwich designs and also in comparison to buckling type designs, which is especially applicable for integral machined constructions and for design load cases with a single predominant load direction and asymmetric truss arrangements. Asymmetric truss arrangements are arrangements that comprise truss members with differing inclination angles, wherein shorter truss members are loaded in compression and larger truss members are loaded in tension.

In general, truss type designs represent an open, discontinuous arrangement with definite load paths. The criticality of such designs having a comparatively low degree of redundancy is comparable to the respective criticality of sandwich designs, which are generally characterized by an entire collapse of a respective composite truss beam at initial failure with poor or none redistribution of loads possible.

Furthermore, truss composite beams with monolithic truss members are also well known. In this case, respective truss members feature proper cross-sections in order to ensure an adequate column buckling resistance.

The document CA 2 589 043 C describes a truss composite beam, wherein the truss members exhibit cross-sections in the form of closed cylindrical strut sections. The use of closed cylindrical strut sections and, more generally, of struts is comparatively efficient due to their optimal circular cross-section. However, an implementation of struts requires a structural and technological complexity of associated nodal points at corresponding mutual interconnection regions of the struts with the connections to the caps.

The document WO 2008/124351 A2 describes a composite truss beam with truss members that exhibit cross-sections in the form of open sections or massive sections. However, massive cross-sections represent a less-efficient truss-member configuration. Furthermore, open cross-sections are moderately efficient but, however, are advantageous by their manufacturing simplicity. Nevertheless, integral arrangements with open cross-sections that are characterized by an integration of caps and web truss members, exhibit deficiencies in terms of local stability within respective nodal points. Therefore, use of additional reinforcing plies at these nodal points is required at the expense of an underlying weight efficiency.

Finally, a differential design with separate truss members, that are mechanically fastened to each other, avoids the above-mentioned stability issues, but considerably increases an overall structural weight due to overlaps and joints. This similarly increases required manufacturing and assembly efforts.

Further attempts for increasing a respective efficiency of respective sandwich structures beyond the limitations of the minimum, technologically feasible configuration takes further advantage of discretization approaches, for instance by transforming a continuous facesheet into an open net of intercrossing strips. A respective construction is e. g. described in the document EP 2 830 042 A1.

Moreover, the document US 8 490 362 B2 describes a composite truss beam with a web that is formed of a plurality of sheets of composite material. Each sheet includes a first face and an opposing second face and each face has a length and a width. Each one of the plurality of sheets is coupled to at least one other of the plurality of sheets face to face such that the length and width of each face substantially matches the length and width of a face of an adjacent sheet. The plurality of sheets is formed to include an upper chord member, a lower chord member, and a plurality of web members extending there between. The structure also includes at least a first flange plate coupled to the web proximate an outer periphery of the web.

More specifically, the document US 8 490 362 B2 describes a composite truss beam with monolithic members having hollow cross-sections. More particularly, this composite truss beam is characterized by irregular cut-outs, i. e. a plurality of cut-outs with different dimensions. Furthermore, the composite truss beam is characterized by multiple differing nodal points, i. e. nodal points where only a single truss member is connected to an associated chord member, nodal points where two truss members are interconnected and respectively connected to an associated chord member, and nodal points where three truss members are interconnected and respectively connected to an associated chord member. Furthermore, the sheets respectively define an offset area, i. e. an area where the sheets are distant from each other, in the region of the chord members. This offset area is defined all along the chord members.

Furthermore, this composite truss beam comprises two cut-outs that are provided to allow passing of wings spars through the composite truss beam, which is designed for use in implementation of aircraft wings. Finally, the truss members of the composite truss beam define hollow cross-sections, in which the respective sheets are simply separated from each other and enclose free space. This free space may be filled by means of a foam core.

However, it should be noted that filling the free space in the composite truss beam of US 8 490 362 B2 after having assembled the two sheets is a complicated and time-consuming task. This considerably increases manufacturing time and costs of respective composite truss beams.

It is, therefore, the object of the present invention to provide a new composite truss beam that can be manufactured in a time-and cost-efficient manner and that provides for an improved structural efficiency. This object is solved by a composite truss beam comprising the features of claim 1.

More specifically, according to the present invention the composite truss beam is provided for supporting shear loads and bending loads in an airframe of a rotary wing aircraft. The composite truss beam comprises a first composite skin panel, a second composite skin panel, and a composite core that is arranged between the first composite skin panel and the second composite skin panel. The first composite skin panel is essentially flat, and at least the second composite skin panel comprises an accommodation in which the composite core is accommodated such that the first composite skin panel, the second composite skin panel and the composite core form a sandwich web. The sandwich web comprises a plurality of semi-truss members and a plurality of nodal areas that interconnects the plurality of semi-truss members. Each nodal area of the plurality of nodal areas interconnects not more than two semi-truss members of the plurality of semi-truss members. The plurality of semi-truss members delimits a plurality of regular cut-outs.

Advantageously, the composite truss beam according to the present invention results from a combination of a truss type design with a sandwich type design. More specifically, in a sandwich type design a respective sandwich structure usually covers an entire web perimeter of a bending beam and a given sandwich web is essentially continuous and flat. For beams with low structural index, a minimum feasible skin panel and thickness of a respective composite core are far too much with respect to a respectively required mechanical performance of the bending beam. Typical truss type designs are monolithic and preferably differential in order to achieve adequate performance at respective nodal points as well as acceptable manufacturing efficiencies. In the inventive composite truss beam, the advantages of both designs are advantageously combined.

According to one aspect, the sandwich web is implemented as a discrete sandwich web that at least essentially represents a sandwich construction with regular cut-outs of specific predetermined geometry. More specifically, this geometry of the cut-outs is preferably traced so as to obtain a discrete sandwich web that features semi-truss members and nodal sandwich regions. In the context of the present invention, semi-truss members designate individual portions of the sandwich web which have a definite orientation. The semi-truss members and the nodal sandwich regions, which are also referred to as nodal areas, are preferably arranged along a respective longitudinal extension of the inventive composite truss beam and multiplied along this longitudinal extension. Thus, the semi-truss members and the nodal areas trace a meander, i. e. a continuous diagonalized path in zig-zag pattern, i. e. such as a sinuous or wiggly pattern.

According to one aspect, not more than two semi-truss members are interconnected to each other at an associated nodal area of the sandwich web. The nodal area thus defines a continuous transition from a first semi-truss member to a second semi-truss member which follows the first semi-truss member in the longitudinal extension of the composite truss beam. Furthermore, the nodal region defines a transition of the sandwich web, in particular the discrete sandwich web, to an associated, preferably monolithic angular flange. The associated monolithic angular flange preferably represents either an integral portion of a cap of the composite truss beam, or an interconnecting part to additional cap members.

According to one aspect, the semi-truss members of the inventive composite truss beam are respectively oriented according to either a first or a second orientation with respect to the longitudinal extension of the inventive composite truss beam. The first and second orientations are preferably defined by a resulting centroidal axis of a given semi-truss member with respect to the longitudinal extension of the inventive composite truss beam. Depending on this orientation, the semi-truss member is provided with an associated length.

Preferably, a selected arrangement with a given orientation is provided such as to load shorter semi-truss members with larger compressive loads. Furthermore, an underlying orientation of two adjacent semi-truss members, i. e. two semi-truss members that follow each other in the longitudinal extension of the inventive composite truss beam, is preferably adapted such as so reach an at least essentially identical stress level and buckling resistance using the same skin and the same core thickness for both semi-truss members.

By way of example, shorter semi-truss members may be oriented perpendicular to the longitudinal extension of the inventive composite truss beam, and longer semi-truss members may be arranged in-between the shorter semi-truss members with an angle of approximately 38° with respect to the longitudinal extension of the inventive composite truss beam. However, it should be noted that the angle of 38° is only indicated by way of example and not for restricting the invention accordingly, as this angle may vary in a wider, application-specific range, e.g. a range from 10° to 70°.

According to one aspect, the inventive composite truss beam represents a one-shot part with a discrete sandwich web and two monolithic angular flanges, the sandwich web being connected to the monolithic angular flanges at least at the respective nodal areas. The monolithic angular flanges can either be discontinuous and, e. g. only connected to the nodal areas, or they can be continuous along the entire longitudinal extension of the inventive composite truss beam.

As described above, the inventive composite truss beam is preferably only provided with semi-truss members. This is due to the fact that a respective width of these semi-truss members is larger than a required core thickness as a result of technological constraints set by respective ramps, core height and transition radius and skin overlapping width, but also due to a respective required stiff transition to the nodal areas. Consequently, the discrete sandwich web does not act as a pure truss construction with tension-compression load paths along the centroidal axis of the truss members, but superimposes a framework and plate function due to a considerable in-plane bending rigidity of the semi-truss members and the flange transition regions. Thus, an achieved mechanical behaviour of the inventive composite truss beam corresponds to a behaviour that is neither the behaviour of a pure truss construction nor the behaviour of a pure shear web. In fact, a resulting smeared shear stiffness is larger than a respective stiffness of a truss construction, but lower than a respective stiffness of a pure shear web.

According to one aspect, the sandwich web is embodied as a typical sandwich arrangement with an upper and a lower skin panel and a composite core. The core is preferably a honeycomb core and the skin panels are preferably adhesively bonded to the composite core by means of adhesive films. Respective free edge borders of the sandwich web in proximity to the regular cut-outs preferentially show a ramp down and a free flange at which the upper and lower skin panels are interconnected, thus, closing a respective cross-sectional profile of the semi-truss members of the sandwich web.

According to one aspect, the free flange is a monolithic angular flange that is preferably arranged coplanar or at least in parallel to an underlying web plane of the sandwich web. However, the monolithic angular flange may likewise be inclined with respect to the web plane, for instance as a continuation of the edge ramp, as well as to increase the resulting moments of inertia of the semi-truss members at their critical middle region, hence, improving their column buckling resistance.

According to one aspect, an underlying cross-sectional profile of the semi-truss members builds only up to one side of the web plane in order to achieve the easiest manufacturing approach, i. e. a flat tooling and a trapezoidal one-sided machined core. However, the cross-sectional profile could be arranged alternatively symmetrical to the web plane in order to eliminate an eccentric position of the centroidal axis with respect to the web plane. Thus, associated parasitic moments, which are, nevertheless, of second order, can be avoided advantageously.

Preferably, the inventive composite truss beam is realized such that local loads - such as those associated to the attachment of further structural elements or equipment - are only introduced within the nodal areas. However, the term "within" also refers to an inclusion of the local loads close, respectively, in proximity to the nodal areas.

Advantageously, the inventive composite truss beam allows to overcome limitations that are set by a minimum feasible configuration of a continuous sandwich construction by means of discretization. As a result, a respective structural efficiency of the sandwich construction is considerably improved. More specifically, the inventive composite truss beam allows to obtain a total weight saving of at least 20% to 30% in comparison to a continuous, conventional composite sandwich design truss beam, still showing generous margins with respect to strength and stability requirements.

In addition, the inventive composite truss beam is implemented as a one-piece component in an integral design that uses conventional, well-known technologies, and avoids use of different individual parts and their interconnections, as would be needed using conventional truss constructions. In particular, use of a respective one-piece design with the well-known manufacturing techniques leads to an improved compromise of structural performance and manufacturing and cost efficiency.

Furthermore, the inventive composite truss beam advantageously allows to provide the nodal areas as sandwich regions with large local and global rigidity. Thus, important drawbacks at nodal areas of conventional integral monolithic truss constructions, such as local instabilities due to a respective in-plane bending rigidity of the framework, can be overcome reliably.

Finally, it should be noted that a respective criticality of truss type designs with respect to their lack of load path redundancy does not represent a disadvantage in the inventive composite truss beam, but is deemed comparable to that of pure sandwich designs which are characterized by an entire collapse of a respective beam at initial failure with poor or none redistribution of loads possible.

According to a preferred embodiment, the sandwich web comprises at least one monolithic angular flange and at least one associated monolithic flange transition region. The at least one monolithic angular flange is connected to the sandwich web at the associated monolithic flange transition region.

According to a further preferred embodiment, the sandwich web and the at least one associated monolithic flange transition region are integrally formed.

According to a further preferred embodiment, at least one monolithic cap is mounted to the at least one monolithic angular flange.

According to a further preferred embodiment, the composite truss beam has a longitudinal extension and a transversal extension and comprises a first monolithic cap and a second monolithic cap. The sandwich web comprises a first angular flange, a second angular flange, a first monolithic flange transition region and a second monolithic flange transition region. The first and second monolithic flange transition regions are arranged on opposed sides of the sandwich web with respect to the transversal extension and extend in direction of the longitudinal extension. The first angular flange is connected to the sandwich web at the first monolithic flange transition region and the second angular flange is connected to the sandwich web at the second monolithic flange transition region. The first monolithic cap is mounted to the first angular flange and the second monolithic cap is mounted to the second angular flange.

According to a further preferred embodiment, each one of the first and second angular flanges is at least continuous over at least two of the plurality of regular cut-outs, preferably monolithic.

According to a further preferred embodiment, the plurality of semi-truss members and the plurality of nodal areas form a meander. In the context of the present invention, a meander is considered to define a sinuous line or a wiggly line, which comprises a simple zig-zag pattern as well as a continuous diagonalized path.

According to a further preferred embodiment, at least a predetermined number of regular cut-outs of the plurality of regular cut-outs is at least essentially triangular.

According to a further preferred embodiment, the accommodation of the second composite skin panel comprises a trapezoidal shape with lateral ramps that migrate into at least essentially flat skin interconnection areas.

According to a further preferred embodiment, the second composite skin panel is mounted to the first composite skin panel at the at least essentially flat skin interconnection areas.

According to a further preferred embodiment, the sandwich web forms a web plane, wherein the at least essentially flat skin interconnection areas are at least approximately oriented coplanar to the web plane.

According to a further preferred embodiment, the sandwich web forms a web plane, wherein the at least essentially flat skin interconnection areas and the web plane form a predetermined angle.

According to a further preferred embodiment, the composite truss beam has a height and each one of the plurality of semi-truss members comprises a width that is two to ten times smaller than the height.

According to a further preferred embodiment, the composite core comprises a honeycomb core.

The present invention further provides a rotary wing aircraft with a composite truss beam as described above.

Preferred embodiments of the invention are outlined by way of example in the following description with reference to the attached drawings. In these attached drawings, identical or identically functioning components and elements are labelled with identical reference numbers and characters and are, consequently, only described once in the following description.
- Figure 1 shows a lateral view of a rotary wing aircraft with a fuselage according to the invention,
- Figure 2 shows a perspective view of a portion of the fuselage of the rotary wing aircraft of Figure 1,
- Figure 3 shows a perspective view of a composite truss beam according to the invention,
- Figure 4 shows a perspective view of the composite truss beam of Figure 3 with a removed cap,
- Figure 5 shows an exploded view of the composite truss beam of Figure 3 and Figure 4,
- Figure 6 shows a side view and a cut view seen in direction of a cut line VI-VI of the composite truss beam of Figure 3 to Figure 5, and
- Figure 7 shows three exemplary cut views of the composite truss beam of Figure 3 to Figure 6.

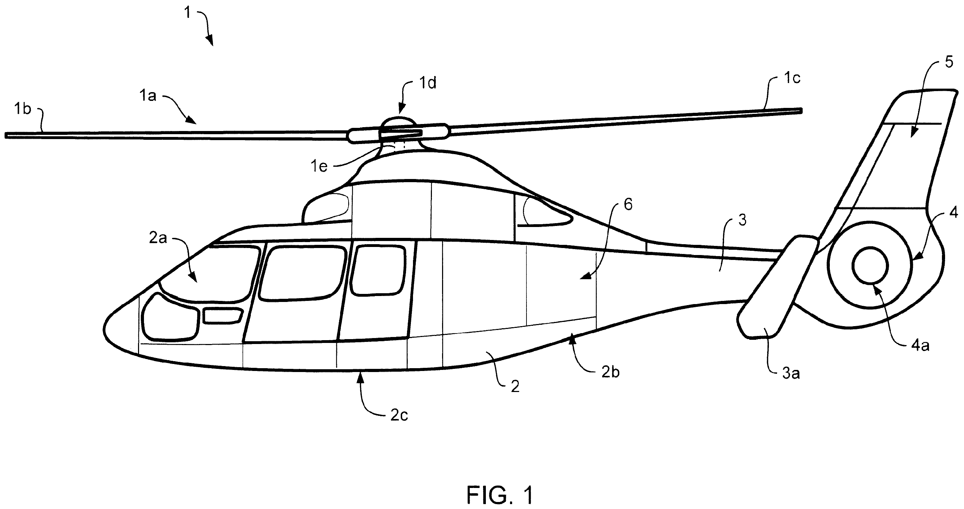

Figure 1 shows an aircraft 1 that is exemplarily illustrated as a rotary wing aircraft and, more particularly, as a helicopter. Thus, for purposes of simplicity and clarity, the aircraft 1 is hereinafter referred to as the "helicopter" 1.

Illustratively, the helicopter 1 comprises a fuselage 2 that forms an airframe of the helicopter 1. The fuselage 2 exemplarily forms a cabin 2a, a rear fuselage 2b, and a center fuselage 2c. The rear fuselage 2b is connected to a tail boom 3.

Illustratively, the helicopter 1 further comprises at least one multi-blade main rotor 1a for providing lift and forward or backward thrust during operation. The at least one multi-blade main rotor 1a comprises a plurality of rotor blades 1b, 1c that are mounted at an associated rotor head 1d to a rotor shaft 1e, which rotates in operation of the helicopter 1 around an associated rotor axis.

By way of example, the helicopter 1 further comprises at least one preferentially shrouded counter-torque device 4 configured to provide counter-torque during operation, i. e. to counter the torque created by rotation of the at least one multi-blade main rotor 1a for purposes of balancing the helicopter 1 in terms of yaw. The at least one counter-torque device 4 is illustratively provided at an aft section of the tail boom 3 and preferably comprises a tail rotor 4a. The aft section of the tail boom 3 preferably further comprises a fin 5. Illustratively, the tail boom 3 is also provided with a suitable horizontal stabilizer 3a.

Illustratively, the helicopter 1 and, more specifically, the fuselage 2 comprises at least one composite sandwich panel 6. More generally, an outer shell of the helicopter 1 is preferably at least essentially implemented by means of composite material and, more specifically, by a plurality of composite sandwich panels that are configured similar to the composite sandwich panel 6.

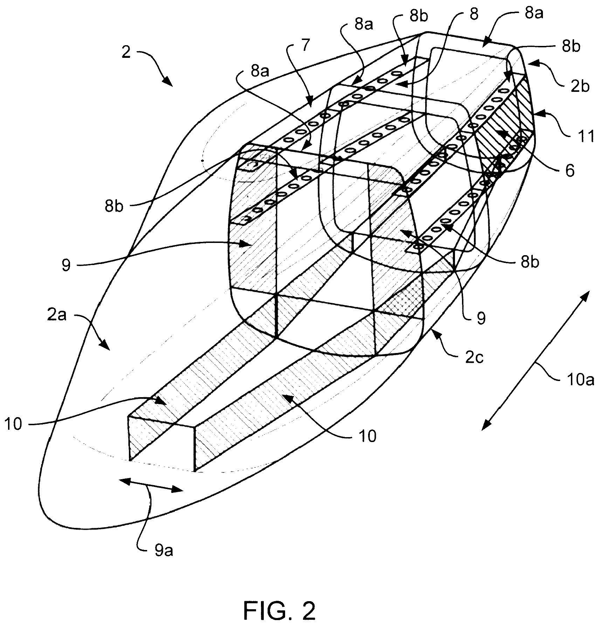

Figure 2 shows the fuselage 2 of Figure 1 for illustrating an exemplary configuration thereof. According to one aspect, at least the center fuselage 2c, but preferentially also the rear fuselage 2b, is provided with a multiplicity of framing structural elements 7 that define a stiffening framework 8.

More specifically, the stiffening framework 8 preferably comprises a grid of frames 8a and longitudinal members 8b. The frames 8a exhibit transverse extensions that are preferably oriented along a transversal direction 9a of the fuselage 2 and, thus, of the helicopter 1 of Figure 1, i. e. a direction that is transverse to a forward flight direction of the helicopter 1 of Figure 1. By way of example, the frames 8a are illustrated having a closed, ring-shaped form that defines a frame structure. The longitudinal members 8b exhibit longitudinal extensions that are preferably at least essentially oriented along a longitudinal direction 10a of the fuselage 2 and, thus, of the helicopter 1 of Figure 1, i. e. a direction that is at least approximately in parallel to a forward flight direction of the helicopter 1 of Figure 1. Preferably, the longitudinal members 8b connect the frames 8a to each other.

However, it should be noted that for clarity and simplicity of the drawings only four longitudinal members 8b are shown. Nevertheless, the fuselage 2 may be provided with multiple longitudinal members 8b and also with a greater number of frames 8a than illustrated. The number and orientation of the frames 8a and longitudinal members 8b may be adapted to a desired or required size of bay that should be provided by means of the frames 8a and longitudinal members 8b in an application-specific manner. By way of example, a single bay 11 is highlighted that is encompassed by two of the frames 8a and two of the longitudinal members 8b. The bay 11 is exemplarily provided with the composite sandwich panel 6 of Figure 1.

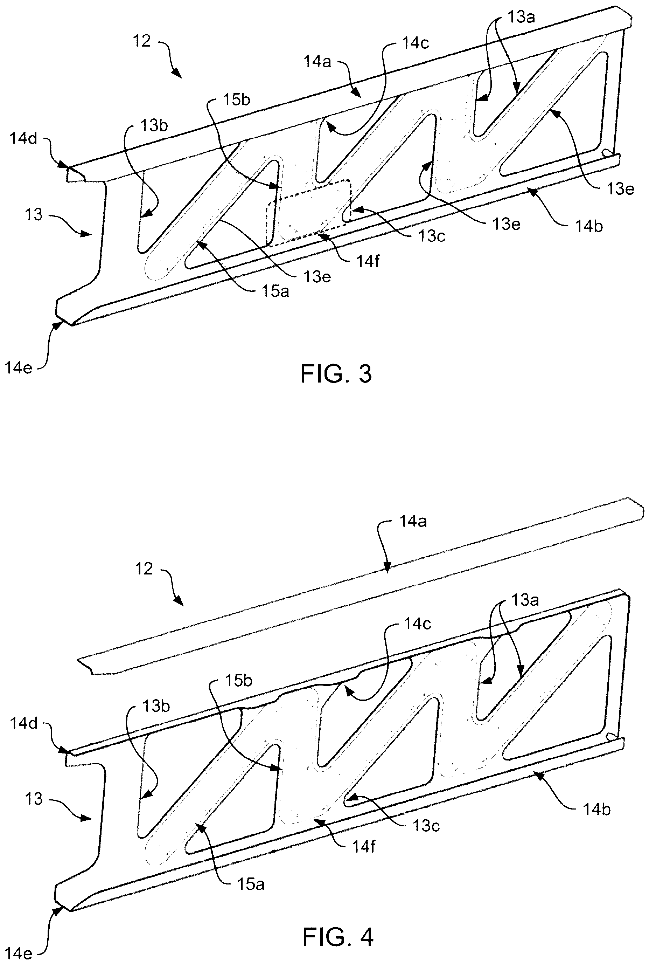

According to one aspect, the frames 8a and longitudinal members 8b can be implemented in any suitable manner, even in a conventional well-known manner. However, one or more of the frames 8a may also comprise one or more vertical beams 9 that are implemented by means of composite truss beams according to the present invention. Likewise, the fuselage 2 may also be provided with one or more longitudinal beams 10, e. g. in a subfloor region of the helicopter 1, which are also implemented by means of composite truss beams according to the present invention. An exemplary composite truss beam is described hereinafter in detail with respect to Figure 3 to Figure 7.

Figure 3 shows a composite truss beam 12 according to the present invention, which may e. g. be used to implement one of the vertical beams 9 and/or the longitudinal beams 10 of Figure 2. The composite truss beam 12 is preferably adapted for supporting shear loads and bending loads in an airframe of a rotary wing aircraft, such as the fuselage 2 of the helicopter 1 of Figure 1.

According to one aspect, the composite truss beam 12 comprises a sandwich web 13 having a plurality of semi-truss members 13a and a plurality of nodal areas 13c that interconnects the plurality of semi-truss members 13a. It should be noted that in the context of the present invention, the expression "semi-truss member" generally refers to an individual portion of the sandwich web 13 that has a definite orientation and that interconnects to associated nodal areas. Furthermore, these semi-truss members have a width that is larger than a required core thickness and they are provided with a stiff transition to respective nodal areas to which they are connected.

Preferably, each nodal area of the plurality of nodal areas 13c interconnects not more than two semi-truss members of the plurality of semi-truss members 13a. Furthermore, the plurality of semi-truss members 13a preferentially delimits a plurality of regular cut-outs 13b.

The plurality of regular cut-outs 13b preferably comprises cut-outs 13e having a predetermined shape, e. g. a triangular shape. In other words, the cut-outs 13e have a specific geometry that can be predetermined in an application-specific manner and that is only by way of example triangular and not for limiting the present invention accordingly. However, in the illustrated example, all cut-outs 13e preferably comprise an at least essentially triangular shape. It should be noted, that only three triangular cut-outs 13e are labeled in Figure 3 for simplicity and clarity of the drawings.

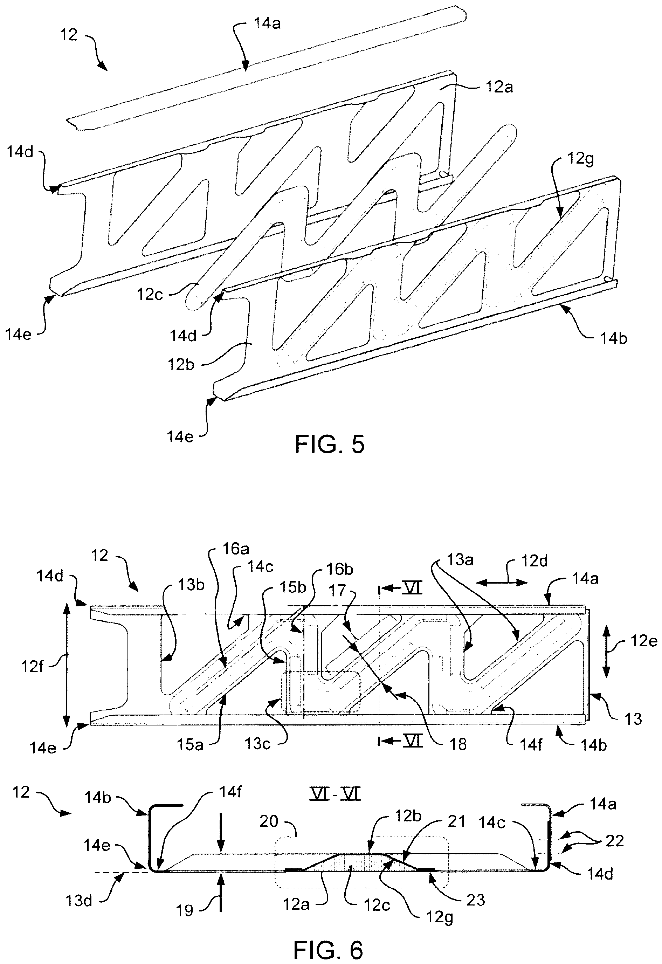

It should further be noted that only two of the plurality of semi-truss members 13a and only a single nodal area of the plurality of nodal areas 13c is labeled for clarity and simplicity of the drawings. However, as can clearly be seen from the labeled semi-truss members 13a, according to one aspect only two different semi-truss member types are provided, i. e. semi-truss members that may have a first or a second orientation with respect to the longitudinal extension of the composite truss beam 12 (longitudinal beam extension 12d of Figure 6).

According to one aspect, the sandwich web 13 comprises two different types of semi-truss members. More specifically, the sandwich web 13 preferably comprises diagonal semi-truss members 15a and transversal semi-truss members 15b. However, for purposes of clarity and simplicity of the drawings, only a single diagonal semi-truss member 15a and a single transversal semi-truss member 15b are labeled.

The diagonal semi-truss member 15a is preferably provided with a longitudinal extension that is oriented resp. arranged with a predetermined angle to a longitudinal extension (12d in Figure 6) of the composite truss beam 12, as explained in more detail below with reference to Figure 6. The transversal semi-truss member 15b is preferably arranged perpendicular to the longitudinal extension (12d in Figure 6) of the composite truss beam 12 according to one aspect, as further illustrated in Figure 6. The first and second orientations are described in more detail below with reference to Figure 6.

According to one aspect, the sandwich web 13 comprises at least one preferably monolithic angular flange and at least one associated, comparatively also monolithic flange transition region. The at least one monolithic angular flange is preferentially connected to the sandwich web 13 at the associated monolithic flange transition region.

By way of example, the sandwich web 13 comprises a preferably monolithic upper angular flange 14d and a preferably monolithic lower angular flange 14e, as well as associated, preferably monolithic upper and lower flange transition regions 14c, 14f. The monolithic upper angular flange 14d is connected to the sandwich web 13 at the associated monolithic upper flange transition region 14c and the monolithic lower angular flange 14e is connected to the sandwich web 13 at the associated monolithic lower flange transition region 14f. Preferably, the sandwich web 13 and at least one and, preferentially, both of the associated monolithic upper and lower flange transition regions 14c, 14f are integrally formed, i. e. formed in a single piece.

According to one aspect, at least one monolithic cap is mounted to one of the monolithic upper and/or lower angular flanges 14d, 14e. Preferably, a monolithic cap 14a is mounted to the monolithic upper angular flange 14d and a lower cap 14b is mounted to the monolithic lower angular flange 14e.

Figure 4 shows the composite truss beam 12 of Figure 3 with the upper and lower caps 14a, 14b, the upper and lower angular flanges 14d, 14e, as well as the sandwich web 13. Figure 4 illustrates a preferable implementation of the upper and lower angular flanges 14d, 14e, according to which each one of the upper and lower angular flanges 14d, 14e is at least continuous over at least two of the plurality of regular cut-outs 13b. Preferably, each one of the upper and lower angular flanges 14d, 14e is monolithic, as described above with reference to Figure 3.

Figure 4 further illustrates a preferred implementation of the upper and lower angular flanges 14d, 14e. Each one of the upper and lower angular flanges 14d, 14e is preferably at least continuous between two adjacent nodal areas of the plurality of nodal areas 13c, preferentially at least continuous over at least two of the plurality of regular cut-outs 13b.

Figure 5 shows the composite truss beam 12 of Figure 3 and Figure 4 for further illustrating a preferred construction thereof. Accordingly, the composite truss beam 12 comprises a rear composite skin panel 12a, a front composite skin panel 12b, and a composite core 12c that preferably form the sandwich web 13 of Figure 3 and Figure 4. As described above, the composite truss beam 12 further comprises the upper and lower caps 14a, 14b.

The rear composite skin panel 12a is illustratively essentially flat according to one aspect. The front composite skin panel 12b, however, preferably comprises an accommodation 12g in which the composite core 12c is accommodated such that the composite core 12c is arranged in the sandwich web 13 between the rear composite skin panel 12a and the front composite skin panel 12b. Therefore, the web 13, which is defined by means of the rear composite skin panel 12a, the front composite skin panel 12b and the composite core 12c, is also referred to as the "sandwich web" in the context of the present invention.

Figure 6 shows the composite truss beam 12 of Figure 3 to Figure 5, which illustratively extends in a longitudinal direction, thus, having a longitudinal extension 12d, and in a transversal direction, thus, having a transversal extension 12e. In the transversal extension 12e, the beam exhibits a predetermined height 12f.

The composite truss beam 12 comprises the sandwich web 13 of Figure 3 to Figure 5 that includes the plurality of semi-truss members 13a which are interconnected by the plurality of nodal areas 13c. The sandwich web 13 is provided with the plurality of regular cut-outs 13b such that the sandwich web 13 is in the longitudinal extension 12d of the composite truss beam 12, but also in the transversal extension 12e of the composite truss beam 12, implemented as a discontinuous structure.

According to one aspect, the plurality of semi-truss members 13a and the plurality of nodal areas 13c form a meander. More specifically, the plurality of semi-truss members 13a and the plurality of nodal areas 13c preferably form a continuous diagonalized path in zig-zag pattern that starts at one axial end of the composite truss beam 12 and runs in an uninterrupted manner via the plurality of semi-truss members 13a and the plurality of nodal areas 13c until the opposed axial end of the composite truss beam 12 under forming a sinuous line resp. a wiggly line. A respectively provided exact shape of this meander is defined by predetermined orientation angles at which the plurality of semi-truss members 13a is arranged in the sandwich web 13.

More specifically, according to one aspect the plurality of semi-truss members 13a comprises successive arrangements of the diagonal semi-truss member 15a and the transversal semi-truss member 15b of Figure 3. The diagonal semi-truss member 15a exemplarily comprises a centroidal axis 16a, which is illustratively arranged at a respective mid-free portion 17 of the diagonal semi-truss member 15a, which is illustratively oriented at an angle of approximately 38° with respect to the longitudinal beam extension 12d. However, it should be noted that this angle is merely illustrated by way of example and not for limiting the invention accordingly. Instead, this angle may be selected from a wide range of angles which may be selected in an application-specific manner, e. g. from a range of 10° to 70°.

The centroidal axis 16a preferably intersects a respective centroidal axis 16b of the transversal semi-truss member 15b that succeeds to the diagonal semi-truss member 15a at the monolithic upper angular flange 14d, respectively at the monolithic upper cap 14a of the composite truss beam 12. The centroidal axis 16b is also arranged at the respective mid-free portion 17 of the transversal semi-truss member 15b and according to one aspect arranged jn perpendicular to the longitudinal beam extension 12d. However, it should be noted that also this angle of 90° is only illustrated by way of example and not for limiting the invention accordingly, as this angle may likewise be selected in a wide predetermined range and preferably in an application-specific manner, e. g. from a range of 90° to 140°.

Figure 6 further illustrates the monolithic upper and lower flange transition regions 14c, 14f, which are preferably arranged on opposed sides of the sandwich web 13 with respect to the transversal beam extension 12e and which extend in direction of the longitudinal beam extension 12d. Preferably, the upper and lower flange transition regions 14c, 14f extend all over the longitudinal beam extension 12d.

According to one aspect, each semi-truss member of the plurality of semi-truss members 13a has a width 18 that is smaller than the beam height 12f. Preferably, each one of the plurality of semi-truss members 13a has a width 18 that is two to ten times smaller than the beam height 12f. A preferred cross-section of the composite truss beam 12 is also illustrated in Figure 6, seen in direction of a cut line VI-VI.

The cut view of the composite truss beam 12 further illustrates the accommodation 12g of Figure 5 of the front composite skin panel 12b. According to one aspect, the accommodation 12g has a trapezoidal shape with lateral ramps 21 that migrate into at least essentially flat skin interconnection areas 23. For simplicity and clarity of the drawings, however, only a single interconnection area is labeled with the reference sign 23. Preferably, the front composite skin panel 12b is mounted to the rear composite skin panel 12a of the composite truss beam 12 at the essentially flat skin interconnection areas 23.

According to one aspect, each one of the plurality of semi-truss members 13a has a thickness 19, that is smaller than a length of the monolithic upper and lower angular flanges 14d, 14e, respectively the monolithic upper and lower caps 14a, 14b. By way of example, the monolithic lower cap 14b is an integral part of the monolithic lower angular flange 14e. In contrast, the monolithic upper cap 14a is illustratively mounted to the monolithic upper angular flange 14d by means of suitable fixation means 22, such as e. g. screws, rivets or adhesives. However, it should be noted that both ways of mounting the upper and lower caps 14a, 14b to the upper and lower angular flanges 14d, 14e, respectively, are merely shown by way of example and not for limiting the invention accordingly. Instead, any suitable fixation means that can be used for mounting the upper and lower caps 14a, 14b to the upper and lower angular flanges 14d, 14e are likewise contemplated.

Illustratively, the sandwich web 13 forms a web plane 13d. According to one aspect, the monolithic upper and lower angular flanges 14d, 14e are at least partly oriented in perpendicular to the web plane 13d with the upper and lower caps 14a, 14b having respectively at least a portion that extends in parallel to the web plane 13d. Thus, the composite truss beam 12 approximately forms a U-shaped form in cross-section.

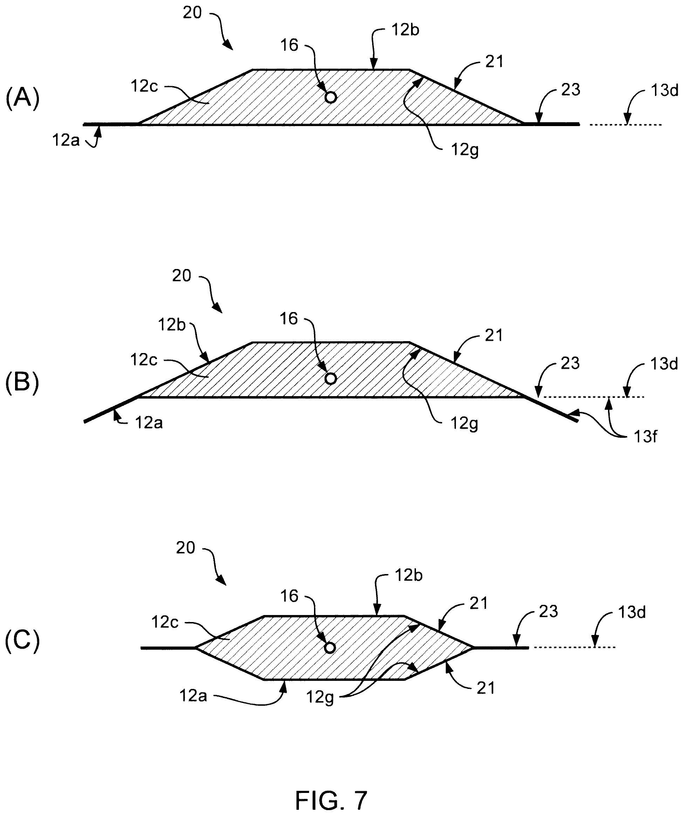

By way of example, the illustrated semi-truss member that corresponds to a diagonal semi-truss member 15a has a cross-section 20 that can be formed in various different ways, as explained hereinafter with respect to Figure 7.

Figure 7 shows the cross-section 20 of the semi-truss member of Figure 6 according to three different variants illustrated in parts (A), (B) and (C) of Figure 7. The illustrated cross-section 20 is applicable to both, the diagonal semi-truss members 15a and the transversal semi-truss members 15b of Figure 6, so that the centroidal axis of the illustrated semi-truss member is generally indicated with the reference sign 16 instead of one of the reference signs 16a, 16b.

According to part (A), the interconnection areas 23 of the accommodation 12g of the front composite skin panel 12b are at least approximately coplanar to the web plane 13d. This configuration is already shown in Figure 6.

Part (B) shows a first variant, according to which the flat skin interconnection areas 23 and the web plane 13d form a predetermined angle 13f. In other words, the ramps 21 migrate into the flat skin interconnection areas 23 without forming an angle between the ramps 21 and the flat skin interconnection areas 23 as in part (A). Thus, the rear composite skin panel 12a is no more flat, as illustrated in Figure 5 and Figure 6, but now also comprises ramps that are formed by the flat skin interconnection areas 23.

Part (C) shows a further variant, according to which the accommodation 12g is formed in the front composite skin panel 12b, and also in the rear composite skin panel 12a.

It should be noted that modifications to the above described embodiments are within the common knowledge of the person skilled in the art and, thus, also considered as being part of the present invention. For instance, it should be noted that the rear and front composite skin panels 12a, 12b of the composite truss beam 12 described with respect to Figure 3 to Figure 7 can be implemented by means of any suitable composite material, preferably fiber reinforced polymers such as carbon fiber reinforced polymers, glass fiber reinforced polymers, aramid fiber reinforced polymers and so on. Furthermore, the above described composite core 12c can be made of any suitable material, but is preferably implemented as a honeycomb core. However, other core materials such as a foam and so on are likewise contemplated.

### Reference List

- 1: rotary wing aircraft
- 1a: multi-blade main rotor
- 1b, 1c: rotor blades
- 1d: rotor head
- 1e: rotor shaft
- 2: fuselage
- 2a: cabin
- 2b: rear fuselage
- 2c: center fuselage
- 3: tail boom
- 3a: horizontal stabilizer
- 4: counter-torque device
- 4a: tail rotor
- 5: fin
- 6: composite panel
- 7: framing structural elements
- 8: stiffening framework
- 8a: frames
- 8b: longitudinal members
- 9: vertical beams
- 9a: transversal direction
- 10: longitudinal beams
- 10a: longitudinal direction
- 11: bay
- 12: composite truss beam
- 12a: rear composite skin panel
- 12b: front composite skin panel
- 12c: composite core
- 12d: longitudinal beam extension
- 12e: transversal beam extension
- 12f: beam height
- 12g: accommodation for composite core
- 13: sandwich web
- 13a: plurality of semi-truss members
- 13b: plurality of web cut-outs
- 13c: plurality of nodal areas
- 13d: web plane
- 13e: triangular cut-outs
- 13f: predetermined angle
- 14a: upper cap
- 14b: lower cap
- 14c: upper flange transition region
- 14d: upper angular flange
- 14e: lower angular flange
- 14f: lower flange transition region
- 15a: diagonal semi-truss member
- 15b: transversal semi-truss member
- 16: centroidal axis of semi-truss member
- 16a: centroidal axis of diagonal semi-truss member
- 16b: centroidal axis of transversal semi-truss member
- 17: free length of semi-truss member
- 18: width of semi-truss member
- 19: thickness of semi-truss member
- 20: cross-section of semi-truss member
- 21: ramps
- 22: fixation means
- 23: skin interconnection area

## Claims

1. A composite truss beam (12) for supporting shear loads and bending loads in an airframe (2) of a rotary wing aircraft (1), comprising a first composite skin panel (12a), a second composite skin panel (12b), and a composite core (12c) that is arranged between the first composite skin panel (12a) and the second composite skin panel (12b), **characterized in that** the first composite skin panel (12a) is essentially flat, and that at least the second composite skin panel (12b) comprises an accommodation (12g) in which the composite core (12c) is accommodated such that the first composite skin panel (12a), the second composite skin panel (12b) and the composite core (12c) form a sandwich web (13), the sandwich web (13) comprising a plurality of semi-truss members (13a) and a plurality of nodal areas (13c) that interconnects the plurality of semi-truss members (13a), wherein each nodal area of the plurality of nodal areas (13c) interconnects not more than two semi-truss members of the plurality of semi-truss members (13a), and wherein the plurality of semi-truss members (13a) delimits a plurality of regular cut-outs (13b).

2. The composite truss beam (12) of claim 1,
**characterized in that** the sandwich web (13) comprises at least one monolithic angular flange (14d, 14e) and at least one associated monolithic flange transition region (14c, 14f), the at least one monolithic angular flange (14d, 14e) being connected to the sandwich web (13) at the associated monolithic flange transition region (14c, 14f).

3. The composite truss beam (12) of claim 2,
**characterized in that** the sandwich web (13) and the at least one associated monolithic flange transition region (14c, 14f) are integrally formed.

4. The composite truss beam (12) of claim 2,
**characterized in that** at least one monolithic cap (14a, 14b) is mounted to the at least one monolithic angular flange (14d, 14e).

5. The composite truss beam (12) of claim 1,
**characterized by** a longitudinal extension (12d) and a transversal extension (12e), the composite truss beam (12) comprising a first monolithic cap (14a) and a second monolithic cap (14b), wherein the sandwich web (13) comprises a first angular flange (14d), a second angular flange (14e), a first monolithic flange transition region (14c) and a second monolithic flange transition region (14f), the first and second monolithic flange transition regions (14c, 14f) being arranged on opposed sides of the sandwich web (13) with respect to the transversal extension (12e) and extending in direction of the longitudinal extension (12d), wherein the first angular flange (14d) is connected to the sandwich web (13) at the first monolithic flange transition region (14c) and the second angular flange (14e) is connected to the sandwich web (13) at the second monolithic flange transition region (14f), and wherein the first monolithic cap (14a) is mounted to the first angular flange (14d) and the second monolithic cap (14a) is mounted to the second angular flange (14e).

6. The composite truss beam (12) of claim 5,
**characterized in that** each one of the first and second angular flanges (14d, 14e) is at least continuous over at least two of the plurality of regular cut-outs (13b), preferably monolithic.

7. The composite truss beam (12) of claim 1,
**characterized in that** the plurality of semi-truss members (13a) and the plurality of nodal areas (13c) form a meander.

8. The composite truss beam (12) of claim 7,
**characterized in that** at least a predetermined number of cut-outs (13e) of the plurality of regular cut-outs (13b) is at least essentially triangular.

9. The composite truss beam (12) of claim 1,
**characterized in that** the accommodation (12g) of the second composite skin panel (12b) comprises a trapezoidal shape with lateral ramps (21) that migrate into at least essentially flat skin interconnection areas (23).

10. The composite truss beam (12) of claim 9,
**characterized in that** the second composite skin panel (12b) is mounted to the first composite skin panel (12a) at the at least essentially flat skin interconnection areas (23).

11. The composite truss beam (12) of claim 10,
**characterized in that** the sandwich web (13) forms a web plane (13d), wherein the at least essentially flat skin interconnection areas (23) are at least approximately coplanar to the web plane (13d).

12. The composite truss beam (12) of claim 10,
**characterized in that** the sandwich web (13) forms a web plane (13d), wherein the at least essentially flat skin interconnection areas (23) and the web plane (13d) form a predetermined angle (13f).

13. The composite truss beam (12) of claim 1,
**characterized by** a height (12f), wherein each one of the plurality of semi-truss members (13a) comprises a width (18) that is two to ten times smaller than the height (12f).

14. The composite truss beam (12) of claim 1,
**characterized in that** the composite core (12c) comprises a honeycomb core.

15. A rotary wing aircraft (1) with a composite truss beam (12) according to any one of the preceding claims.
